# EUROPÄISCHE PATENTANMELDUNG

(11) **EP 2 095 726 A1**
(43) Veröffentlichungstag der Anmeldung: **02.09.2009**
(21) Anmeldenummer: 08002993.7
(22) Anmeldetag: 19.02.2008
(51) Int. Cl.: A23L 1/314, A23L 1/317, A23L 3/3508

(54) **Zusatzmittel für Fleischprodukte**

(71) Anmelder: Meat Cracks Technologie GmbH, 49439 Mühlen (DE)
(72) Erfinder: Scheffer, Gregor, 48432 Rheine (DE)
(74) Vertreter: Siekmann, Gunnar

(57) **Zusammenfassung**

Die vorliegende Erfindung betrifft ein Zusatzmittel für Fleischprodukte, ein solches Zusatzmittel enthaltende Fleischprodukte, ein Verfahren zur Herstellung entsprechender Fleischprodukte sowie die Verwendung eines solchen Zusatzmittels zur Verhinderung des Ausblühens von Fleischprodukten. Das erfindungsgemäße Zusatzmittel ist dadurch gekennzeichnet, dass es einen lebensmitteltauglichen Komplexbildner für Mg(II)-lonen umfasst.

## Beschreibung

Die vorliegende Erfindung betrifft ein Zusatzmittel für Fleischprodukte, ein solches Zusatzmittel enthaltende Fleischprodukte, ein Verfahren zur Herstellung entsprechender Fleischprodukte sowie die Verwendung eines solchen Zusatzmittels zur Verhinderung des Ausblühens von Fleischprodukten.

Es ist bekannt, dass verschiedene Fleischprodukte sich während der Trocknung an der Außenseite farblich verändern. So kommt es insbesondere bei schnittfesten, getrockneten Fleischprodukten wie z.B. Rohwürsten und Rohschinken regelmäßig zu mehr oder minder intensiven unerwünschten weißen Belägen oder Ausblühungen bzw. Effloreszenzen, die einen Verkauf der Produkte erschweren oder sogar unmöglich machen. Dieses trifft insbesondere für die osteuropäischen Länder zu. Auch bei gekochten Fleischprodukten sind derartige Probleme mit Ausblühungen bekannt.

Bei früheren Untersuchungen (Kröckel, L., Mitteilungsblatt der Fleischforschung Kulmbach 43, Nr. 166, Seiten 355-362 (2004)) wurde festgestellt, dass es sich bei den Belägen oder Ausblühungen um Magnesiumdilactat ((CH₃CH(OH)COO)₂Mg) oder Creatin handeln kann, wobei Magnesiumdilactat insbesondere von niedrigen pH-Werten begünstigt wird, während Creatin hauptsächlich bei hohen pH-Werten entsteht. In der angegebenen Literaturstelle wird ausgeführt, dass bisher nicht bekannt ist, wie sich die Bildung solcher Beläge verhindern lässt.

Ausgehend von diesem Stand der Technik besteht die Aufgabe der vorliegenden Erfindung darin, die Bildung solcher unerwünschten Beläge oder Ausblühungen zu verhindern oder zumindest deutlich einzuschränken.

Der gegenwärtige Erfinder hat überraschend festgestellt, dass die obige Aufgabe gelöst werden kann, indem zu dem Fleischprodukt während dessen Herstellung ein Komplexbildner für Mg(II)-lonen (Mg⁺⁺) zugesetzt wird.

Was die Wirkungsweise der vorliegenden Erfindung angeht, so wird angenommen, dass Mg(II)-lonen in dem frischen Fleischprodukt quasi in wässriger Lösung vorliegen und es dann bei der Austrocknung zu einer Aufkonzentrierung der Mg(II)-lonen kommt, die daraufhin aus dem Inneren herausgeschwemmt werden und als Magnesiumdilactat-Effloreszenz sichtbar werden. Man vermutet nun, dass durch Zugabe von Komplexbildnern für Mg(II)-lonen vor der Trocknung diese in Komplexe überführt und so in der Wurst gebunden werden und dadurch eine Magnesiumdilactat-Effloreszenz vermieden wird.

Die vorliegende Erfindung betrifft somit unter einem ersten Aspekt ein Zusatzmittel für Fleischprodukte, welches dadurch gekennzeichnet ist, dass es neben der gewünschten Gewürzmischung und gegebenenfalls weiteren üblichen Zusatzstoffen für Fleischprodukte einen lebensmitteltauglichen Komplexbildner für Mg(II)-lonen umfasst.

Da der Komplexbildner für Mg(II)-lonen in Lebensmitteln eingesetzt wird, sollte dieser immer lebensmitteltauglich, d.h. ungiftig und vorzugsweise bereits für Lebensmittel zugelassen sein.

Beispiele für bevorzugte Mg(II)-Komplexbildner sind Triphosphate (E451) wie z.B. Pentanatriumtriphosphat, Calcium-Dinatrium-Ethylendiamintetraacetat (E385 oder Ca-Na-EDTA) oder Anthocyane (E163) wie z.B. Delphinindin (3,5,7-Trihydroxy-2-(3,4,5-trihydroxyphenyl)chromenium, roter Traubenfarbstoff). Pentanatriumtriphosphat ist dabei besonders bevorzugt, da dieses farblos und besonders wirksam ist.

Bei einer bevorzugten Ausführungsform der Erfindung enthält das Zusatzmittel für Fleischprodukte den Komplexbildner in einer Menge von 5 Gew.-% bis 95 Gew.-%, vorzugsweise von 60 Gew.-% bis 80 Gew.-%.

Das Zusatzmittel enthält weiterhin eine Gewürzmischung, die je nach dem herzustellenden Fleischprodukt variiert. Diese Gewürzmischung kann beispielsweise Pfeffer, Paprika, Koriander, Ingwer, Knoblauch, Muskat und andere Gewürze umfassen. Darüber hinaus kann das Zusatzmittel weitere Zusatzstoffe, die in der Fleischproduktion üblich sind, wie z.B. Kochsalz, Zuckerstoffe, Gewürzextrakte, Fasern, Diphosphate, Konservierungsmittel und andere Zutaten enthalten.

Die vorliegende Erfindung betrifft weiterhin ein Fleischprodukt, welches dadurch gekennzeichnet ist, dass dieses einen lebensmitteltauglichen Komplexbildner für Mg(II)-lonen oder ein Zusatzmittel, wie es oben beschrieben wurde, enthält.

Je nach Art des Komplexbildners ist dieser vorzugsweise in einer Menge - ausgedrückt in g pro kg Fleischmasse - von 2,0 bis 10 g pro kg Fleischmasse, insbesondere 2,5 bis 6 g pro kg Fleischmasse in dem Fleischprodukt enthalten. So wird der Komplexbildner Pentanatriumtriphosphat (E451) besonders bevorzugt in einer Menge von 2,5 bis 3,5 g pro kg Fleischmasse, der Komplexbildner Calcium-Dinatrium-Ethylendiamintetraacetat (E385) besonders bevorzugt in einer Menge von 5 bis 9 g pro kg Fleischmasse und der Komplexbildner Delphinindin (E163) besonders bevorzugt in einer Menge von 4 bis 8 g pro kg Fleischmasse eingesetzt.

Die Fleischprodukte, bei denen durch die vorliegende Erfindung eine Ausblühung verhindert werden kann, sind insbesondere rohe Fleischprodukte wie Rohwürste und Rohschinken, z.B. Salami, aber auch gekochte Fleischprodukte wie z.B. Kochsalami, welche darüber hinaus gereift und getrocknet sein können.

Schließlich betrifft die vorliegende Erfindung ein Verfahren zur Herstellung von Fleischprodukten, bei welchem ein lebensmitteltauglicher Komplexbildner für Mg(II)-lonen oder ein Zusatzmittel wie oben beschrieben zugesetzt wird, sowie die Verwendung eines lebensmitteltauglichen Komplexbildners für Mg(II)-lonen oder eines Zusatzmittels wie oben beschrieben zur Verhinderung des Ausblühens von Fleischprodukten.

Im Folgenden wird die vorliegende Erfindung anhand von Ausführungsbeispielen näher erläutert. Diese Ausführungsbeispiele sollen die vorliegende Erfindung jedoch nicht beschränken.

### Beispiel 1: Herstellung eines Zusatzmittels für Fleischprodukte, welches einen Mg(II)-Komplexbildner enthält.

Die einzelnen Zutaten für das Zusatzmittel, wie getrockneter Glucosesirup, gemahlener Pfeffer, Gewürzextrakte und ein Mg(II)-Komplexbildner werden nach einem vorgegebenem Rezept verwogen und in einem geeignetem Mischer homogen vermischt. Danach wird das Produkt verpackt und verschlossen.

### Beispiel 2: Herstellung von Salami unter Verwendung eines Mg(II)-Komplexbildners

Die einzelnen Zutaten für das Fleischbrät, wie Fleischkomponenten (ca. 70 %), Speck (ca. 25 %), Nitritpökelsalz (ca. 3 %), Zuckerstoffe (ca. 0,5 %), Gewürzmischung (ca. 1 %), Starterkulturen und der Komplexbildner, hier Pentanatriumtriphosphat (ca. 0,5 %), werden nach einem vorgegebenen Rezept verwogen. Der Speck im Kutter wird auf die gewünschte Körnung zerkleinert, dann das Fleisch mit den anderen Zutaten, bis auf das Nitritpökelsalz und den Komplexbildner eingekuttert. Zum Ende des Kuttervorgangs wird das Nitritpökelsalz und der Komplexbildner untergekuttert. Danach wird das Brät in Därme gefüllt, wie üblich gereift, geräuchert und getrocknet.

### Beispiel 3: Herstellung eines gekochten Fleischprodukts

Die Herstellung eines gekochten Fleischprodukts ist identisch mit der Vorgehensweise wie im Beispiel 2 beschrieben mit der Ausnahme, dass hier das Nitritpökelsalz und der Komplexbildner schon zu Beginn des Kuttervorgangs zugegeben werden kann und dass die Ware nicht gereift, sondern gegart wird.

### Beispiel 4: Herstellung von Salami ohne Verwendung eines Komplexbildners

Die Herstellung dieses Fleischprodukts (Kontrollprodukt) ist identisch mit der Vorgehensweise wie im Beispiel 2 beschrieben mit der Ausnahme, dass hier der Komplexbildner nicht verarbeitet wurde.

### Beispiel 5: Lagerungstest

Das erfindungsgemäße Produkt aus Beispiel 2 und das Kontrollprodukt aus Beispiel 4 wurden für 30 Tage an der Luft getrocknet. Während das Kontrollprodukt nach 30 Tagen einen deutlichen weißen Belag zeigte, wies das erfindungsgemäße Produkt auch nach 30 Tagen ein unverändertes Aussehen auf und zeigte keinerlei Belag.

## Patentansprüche

1. Zusatzmittel für Fleischprodukte, **dadurch gekennzeichnet, dass** es neben der gewünschten Gewürzmischung und gegebenenfalls weiteren üblichen Zusatzstoffen für Fleischprodukte einen lebensmitteltauglichen Komplexbildner für Mg(II)-lonen umfasst.

2. Zusatzmittel nach Anspruch 1, **dadurch gekennzeichnet, dass** der Komplexbildner in dem Zusatzmittel in einer Menge von 5 Gew.-% bis 95 Gew.-%, vorzugsweise von 60 Gew.-% bis 80 Gew.-% enthalten ist.

3. Zusatzmittel nach Anspruch 1 oder Anspruch 2, **dadurch gekennzeichnet, dass** der Komplexbildner ausgewählt ist aus der Gruppe, bestehend aus Pentanatriumtriphosphat, Calcium-Dinatrium-Ethylendiamintetraacetat und 3,5,7-Trihydroxy-2-(3,4,5-trihydroxyphenyl)chromenium.

4. Fleischprodukt, **dadurch gekennzeichnet, dass** dieses einen lebensmitteltauglichen Komplexbildner für Mg(II)-lonen oder ein Zusatzmittel nach einem der Ansprüche 1 bis 3 enthält.

5. Fleischprodukt nach Anspruch 4, **dadurch gekennzeichnet, dass** dieses den Komplexbildner in einer Menge von 2,0 bis 10 g pro kg Fleischmasse, bevorzugt in einer Menge von 2,5 bis 6 g pro kg Fleischmasse enthält.

6. Fleischprodukt nach Anspruch 4 oder Anspruch 5, **dadurch gekennzeichnet**, das es sich bei dem Fleischprodukt um ein rohes Fleischprodukt oder ein gekochtes Fleischprodukt handelt, welches darüber hinaus gereift und getrocknet sein kann.

7. Verfahren zur Herstellung von Fleischprodukten, **dadurch gekennzeichnet, dass** bei der Herstellung der Fleischprodukte ein lebensmitteltauglicher Komplexbildner für Mg(II)-lonen oder ein Zusatzmittel nach einem der Ansprüche 1 bis 3 zugesetzt wird.

8. Verwendung eines lebensmitteltauglichen Komplexbildners für Mg(II)-lonen oder eines Zusatzmittels nach einem der Ansprüche 1 bis 3 zur Verhinderung des Ausblühens von Fleischprodukten.

9. Verwendung nach Anspruch 8, **dadurch gekennzeichnet, dass** das Ausblühen von Magnesiumdilactat auf Fleischprodukten verhindert wird.
